# EUROPÄISCHE PATENTSCHRIFT

(11) **EP 3 589 786 B1**
(45) Veröffentlichungstag und Bekanntmachung des Hinweises auf die Patenterteilung: **29.11.2023**
(21) Anmeldenummer: 18720142.1
(22) Anmeldetag: 13.04.2018
(51) Int. Cl.: D21G 9/00

(54) **VERFAHREN ZUM BETRIEB EINER PAPIERMASCHINE, ANTRIEBSSYSTEM UND PAPIERMASCHINE**
METHOD FOR OPERATING A PAPER MACHINE, DRIVE SYSTEM AND PAPER MACHINE
PROCÉDÉ DE FONCTIONNEMENT D'UNE MACHINE À PAPIER, SYSTÈME D'ENTRAÎNEMENT ET MACHINE À PAPIER

(30) Priorität: 18.04.2017 EP 17166788
(43) Veröffentlichungstag der Anmeldung: 08.01.2020
(73) Patentinhaber: Siemens Energy Global GmbH & Co. KG, 81739 München (DE)
(72) Erfinder: ARNASON, Ragnar, 91346 Wiesenthal (DE); MEINARDUS, Martin, 90480 Nürnberg (DE); MIELKE, Jürgen, 96049 Bamberg (DE); WITTENDORFER, Uwe, 89551 Königsbronn (DE); WOLF, Gerrit, 76187 Karlsruhe (DE)
(86) Internationale Anmeldenummer: PCT/EP2018/059508
(87) Internationale Veröffentlichungsnummer: WO 2018/192847

(56) Entgegenhaltungen:
- WO-A1-98/38383
- WO-A1-03/058532
- WO-A2-01/75222
- DE-A1-102009 011 217

## Beschreibung

Die Erfindung betrifft ein Verfahren zum Betrieb einer Papiermaschine, ein Antriebssystem sowie eine Papiermaschine.

Papiermaschinen weisen regelmäßig eine Vielzahl von Antrieben (Motoren, Umrichter) auf. Zum Betrieb einer Papiermaschine ist es notwendig, dass eine Mehrzahl der Antriebe der Papiermaschine in deren Bewegungsparametern wie Drehzahl, Drehmoment koordiniert sind.

Im Falle einer Störung im Betriebsablauf ist gemäß dem heutigen Stand der Technik das Bedienpersonal der Papiermaschine durch die Vielzahl von Abhängigkeiten zwischen den Antrieben schnell überfordert. Bahnabrisse und Stillstand-Zeiten sind die negativen Folgen.

WO 98/38383 A1 offenbart ein Verfahren zur Auslegung und/oder Visualisierung von mindestens einer Walzen/Filz-Paarung in der Nasspresse einer Papier- oder Kartonmaschine, wobei zunächst eine Auswahl einer Pressenkonfiguration aus einer mittels eines Computersystems angebotenen Menge unter Berücksichtigung des Einsatzfalles und der gewünschten Papier- oder Kartonqualität erfolgt. Im Anschluss hieran wird eine der Pressen der jeweiligen Pressenkonfiguration selektiert, wobei relevante Ausgangsmaschinen- und Walzenparameter der selektierten Presse aus einer Standarddatenbank gelesen und angezeigt werden. Danach wird eine Berechnung und Ergebnisdarstellung des momentanen Entwässerungsverhaltens der selektierten Presse vorgenommen. Zur Auslegung der Walzen/Filz-Paarung erfolgt ein Verändern von Maschinen- und/oder Walzenparametern der jeweils selektierten Presse, wobei das aufgrund der Parameteränderungen geänderte Entwässerungsverhalten der jeweiligen Walzen/Filz-Paarung der Presse laufend neu berechnet und mindestens teilweise als Trendanzeige dargestellt wird.

DE 10 2009 011 217 A1 offenbart ein Verfahren zur Steuerung mindestens eines Teils einer Papiermaschine. Um eine verbesserte beziehungsweise optimierte Fahrweise einer erweiterten Trockenpartie einer Papiermaschine zu ermöglichen, wird ein verschiedene Anlagenteile umfassendes Modell vorgeschlagen, mittels dem anhand von Werten für die für die Trocknung relevanten Parameter Massen- und Energiebilanzen für die Anlagenteile sowie der spezifische Energieverbrauch in der Trockenpartie berechnet wird.

Daher ist es Aufgabe der Erfindung, die Steuerung einer Papiermaschine so zu gestalten, dass eine vereinfachte Bedienung ermöglicht wird.

Die Aufgabe wird durch ein Verfahren nach Anspruch 1 gelöst.

Die Aufgabe wird weiter durch ein Antriebssystem gemäß Anspruch 9 und eine Papiermaschine nach Anspruch 13 gelöst.

Vorteilhafte Ausgestaltungen und Weiterentwicklungen sind Gegenstand der abhängigen Ansprüche.

Beim Verfahren zum Betrieb einer Papiermaschine umfasst die Papiermaschine eine Mehrzahl von Antrieben und eine Bewegungssteuerung. Hierbei stellen die Antriebe und optional Detektoren Bewegungsparameter für die Bewegungssteuerung bereit, wobei die Bewegungssteuerung anhand der Bewegungsparameter und/oder Regelerparameter zumindest ein Performanzwert bestimmt wird, wobei der zumindest eine Performanzwert einen Betriebszustand der Papiermaschine angibt, wobei der zumindest eine Performanzwert auf einer Anzeige angezeigt wird, dadurch gekennzeichnet, dass der Performanzwert auf zumindest einem der Bewegungsparameter oder zumindest einem Reglerparameter basiert. Insbesondere basiert der jeweilige Performanzwert von der zeitlichen Änderung zumindest eines Bewegungsparameters und/oder der zeitlichen Veränderung zumindest eines Reglerparameters.

Anhand des jeweiligen Performanzwertes werden vorteilhaft die Bewegungsparameter und/oder die Reglerparameter optimiert.

Die Optimierung der Bewegungsparameter und/oder der Reglerparameter erfolgt vorteilhaft derart, dass der Performanzwert verbessert oder erhöht wird.

Geeignete Perfomanzwerte können mittels eines Benchmark-Verfahrens ermittelt werden.

Vorzugsweise werden Performanzwerte unterschiedlicher Papiermaschinen oder Teilen von Papiermaschinen miteinander verglichen.

Vorteilhaft erfolgt eine Anpassung einzelner Bewegungsparameter und/oder Reglerparameter anhand eines besseren oder höheren Performanzwertes einer weiteren Papiermaschine oder eines Teils einer weiteren Papiermaschine.

Vorteilhaft erfolgen eine Anpassung der Bewegungsparameter und/oder der Reglerparameter mit Hilfe künstlicher Intelligenz.

Vorzugsweise sind die Performanzwerte derart ausgestaltet, dass mehrere Teile der jeweiligen Papiermaschine vergleichbar sind.

Vorteilhaft dient eine nicht-zentrale Recheneinheit, auch als Cloud bezeichnet, zum Austausch und zur Anpassung des jeweiligen Performanzwertes unterschiedlicher Teile der jeweiligen Papiermaschine.

Vorteilhaft werden die Reglerparameter und/oder Bewegungsparameter einer ersten Papiermaschine oder einer ersten Einheit oder Teil einer Papiermaschine mit einer zweiten Papiermaschine oder einer anderen Einheit der zweiten Papiermaschine verglichen. Durch einen solchen Vergleich kann ein globaler Performanzwert einer Mehrzahl von Papiermaschinen oder Einheiten von Papiermaschinen gebildet werden.

Vorteilhaft können die Bewegungsparameter und/oder Reglerparameter von einer Einheit der ersten Papiermaschine als Grundlage einer Optimierung zumindest eines Performanzwertes einer weiteren Papiermaschine dienen.

Anstelle einer Papiermaschine kann die Erfindung auch zur Verbesserung der Funktion einer anderen industriellen Anlage dienen.

Das Antriebssystem ist insbesondere für eine Papiermaschine ausgebildet. Das Antriebssystem weist eine Mehrzahl von Antrieben und eine Bewegungssteuerung sowie eine Anzeige auf, wobei die Antriebe und/oder Detektoren zur Bereitstellung von Bewegungsparametern ausgebildet sind, wobei die Bewegungssteuerung zur Bestimmung von Performanzwerten aus den Bewegungsparametern und/oder Reglerparametern vorgesehen ist, wobei die Anzeige zur Anzeige der Performanzwerte vorgesehen ist, dadurch gekennzeichnet, dass sich die Performanzwerte aus den Bewegungsparametern und/oder den Reglerparametern, insbesondere aus deren jeweiligen zeitlichen Veränderungen, ergeben.

Der Erfindung liegt die allgemeine Idee zu Grunde, dass eine Anzeige von Performanzwerten, auch als Key Performance Indicators bezeichnet, die Bedienung einer Papiermaschine vereinfacht. Das Bedienpersonal ist durch die Anzeige der Performanzwerte in die Lage versetzt, die Funktion, die Auslastung und/oder die Produktivität der Papiermaschine zu überwachen. Performanzwerte können von einzelnen Teilen der Papiermaschine ermittelt werden. Einzelne Teile der Papiermaschine sind beispielhaft:
- ein Konstantteil,
- eine Siebpartie,
- eine Pressenpartie,
- eine Trockenpartie sowie
- eine Aufrolleinheit.

Das Anzeigen der Performanzwerte der vorstehenden Teile führt zu einer schnellen und einfachen Übersicht des Bedienpersonals über die Funktion der Papiermaschine.

Durch einen Vergleich einzelner Teile durch geeignete Performanzwerte lassen sich Schwachstellen in der Zusammenwirkung schnell und einfach erkennen.

Eine Bewegungssteuerung weist vorzugsweise eine Speicherprogrammierbare Steuerung (SPS) auf. Eine solche Steuereinrichtung kann auch weiter eine CPU (Central Processing Unit), beispielhaft eine SIMATIC (ggf. mit einem Zusatzmodul) der Firma Siemens AG, umfassen.

Unter einem Bewegungsparameter ist beispielhaft die Drehzahl, das Drehmoment oder eine Abweichung von einer Ist-Drehzahl zu einer Soll-Drehzahl zu verstehen. Darüber hinaus kann auch eine Belastung oder eine Temperatur des jeweiligen Motors ein Bewegungsparameter sein.

Unter einem Reglerparameter wird beispielhaft die Stellgröße eines Reglers verstanden. Als Reglerparameter ist jeder Parameter geeignet, der die Funktion des Reglers beeinflusst. Ein Reglerparameter ist z.B. ein Differentialanteil der Regelung, in Integralanteil der Regelung oder ein Rückkopplungsfaktor.

Vorzugsweise wird aus den jeweiligen Reglerparameter und/oder deren zeitliche Änderung eine Regelgüte bestimmt. Die Regelgüte wird vorteilhaft als Performanzwert angezeigt.

Das Antriebssystem umfasst meist mehrere Antriebe, wobei die Antriebe miteinander gekoppelt sind. Ein Antrieb umfasst meist zumindest einen Motor und jeweils einen (Frequenz-) Umrichter. Die Kopplung erfolgt durch das Zusammenwirken der Motoren über mechanische Elemente wie ein Förderband, welches von zwei Motoren angetrieben wird.

In einer vorteilhaften Ausgestaltung des Verfahrens dienen Bewegungsparameter und/oder Reglerparameter von jeweils zwei Bewegungssteuerungen zur Bestimmung des zumindest einen Performanzwertes, wobei die Bewegungssteuerungen unterschiedlichen Einheiten einer Papiermaschine zugeordnet sind.

Vorteilhaft wird der jeweilige Performanzwert derart angepasst, dass unterschiedliche Einheiten von Papiermaschinen miteinander verglichen werden können.

Vorzugsweise werden iterativ die Reglerparameter und/oder die Bewegungsparameter anhand des jeweiligen Performanzwertes angepasst. Vorteilhaft werden die Reglerparameter und/oder die Bewegungsparameter anhand denjenigen Reglerparamter und/oder Bewegungsparameter iterativ angepasst, die von einer Einheit einer Papiermaschine bereitgestellt werden, welche einen verbesserten Performanzwert aufweist.

Vorteilhaft werden Bewegungsparameter von einer Einheit einer Papiermaschine einer weiteren Einheit einer Papiermaschine bereitgestellt.

Falls der jeweilige Performanzwert durch den Einsatz der bereitgestellten Regelerparameter und/oder Bewegungsparameter verbessert werden kann, so können die Regelerparameter und/oder die Bewegungsparameter der weiteren Einheit angepasst werden.

Somit kann die eine Einheit der jeweiligen Papiermaschine von einer anderen Einheit der jeweiligen Papiermaschine lernen.

Hierbei können Teile einer Papiermaschine oder jeweils Teile unterschiedlicher Papiermaschinen verglichen werden.

Beispielhaft können die Pressenpartie und die Trockenpartie miteinander durch jeweils geeignete Performanzwerte verglichen werden.

Beispielhaft kann als Performanzwert die Produktivität der Pressenpartie und die Produktivität der Trockenpartie verglichen werden.

Weiter kann als Performanzwert der jeweilige spezifische Energieverbrauch (Energieeinheit pro Tonne erzeugtes Papier) der jeweiligen Trockenpartie und der jeweiligen Pressenpartie verglichen werden. Ein Vergleich des jeweiligen spezifischen Energieverbrauchs erlaubt eine vorteilhafte Aufteilung des jeweiligen Energieeinsatzes zur Minimierung des gesamten Energieverbrauchs.

Bei einer weiteren vorteilhaften Ausgestaltung des Verfahrens sind die Bewegungssteuerungen unterschiedlichen Papiermaschinen zugeordnet, wobei die zwischen Bewegungssteuerungen übertragenen Daten mit Hilfe einer technischen Datenverbindung, insbesondere über eine Cloud, übertragen werden.

Durch diese Ausgestaltung können einzelne Teile unterschiedlicher Papiermaschinen verglichen werden. So kann eine Papiermaschine überprüfen, ob bezüglich des Performanzwertes des spezifischen Energieverbrauches oder der Produktivität im Verhältnis zu anderen Papiermaschinen steht.

Falls sich die Performanzwerte wesentlich unterscheiden, kann anhand eines Vergleichs der Bewegungsparameter und/oder der Reglerparameter analysiert werden, wie ggf. Einstellungen zu ändern sind, um den entsprechenden Performanzwert zu verändern.

Vorteilhaft können hierbei Erkenntnisse bezüglich einer Einstellung bei einer weiteren Papiermaschine angewandt werden.

Zudem können gespeicherte Bewegungsparameter und/oder Reglerparameter einer Bewegungssteuerung bereitgestellt werden. Die Speicherung erfolgt vorzugsweise in der Cloud.

Bei einer weiteren vorteilhaften Ausgestaltung des Verfahrens werden die Performanzwerte unterschiedlichen Betriebszuständen der jeweiligen Papiermaschine zugeordnet.

Unterschiedliche Betriebszustände der Papiermaschine sind beispielhaft Einstellungen für die Herstellung unterschiedlicher Papiersorten. Unterschiedliche Betriebszustände können auch Energiesparmodi bei reduzierter Auslastung der jeweiligen Papiermaschine sein.

Durch die Definition unterschiedlicher Betriebszustände können Bewegungsparameter und/oder Reglerparameter des jeweiligen Betriebszustandes gespeichert werden und anhand der Performanzwerte dem Bedienpersonal angezeigt werden.

Bei einer weiteren vorteilhaften Ausgestaltung des Verfahrens erfolgt die Anzeige der Performanzwerte in Form einer Spinnendarstellung, einer Ampeldarstellung oder einem Trend.

Durch eine vorteilhaft gewählte Art und Weise der Darstellung der Performanzwerte kann das Bedienpersonal auf einen Blick den Funktionsmodus der Papiermaschine erkennen.

Durch die Darstellung einer Verknüpfung der einzelnen Performanzwerte in der Darstellung können einander konjugierte Größen miteinander dargestellt werden.

Unter einem Trend eines Performanzwertes kann ein, durch eine Simulation ermittelte, Vorschau verstanden werden. Die Simulation des jeweiligen Performanzwertes erfolgt vorzugsweise ebenfalls in der Cloud.

Insbesondere sind die Performanzwerte in ihrer Entwicklung nach der Zeit darstellbar. Eine solche Darstellung erlaubt es dem Bedienpersonal festzustellen, ob eine Maßnahme den gewünschten Effekt auf dem jeweiligen Betriebsmodus hat.

Bei einer weiteren vorteilhaften Ausgestaltung des Verfahrens erfolgt die Anzeige einer zeitlichen Funktion der Performanzwerte.

Durch die Darstellung der Performanzwerte als Funktion einer Zeit, beispielhaft als Funktion der Betriebsdauer der Papiermaschine, sind Verschleißerscheinungen einfach zu erkennen. Das Bedienpersonal kann demnach anhand der zeitlichen Änderung erkennen, ob und welchen Einfluss eine Wartung der Papiermaschine oder des jeweiligen Antriebs hat.

Bei einer weiteren vorteilhaften Ausgestaltung des Verfahrens wird aus zumindest einem Reglerparameter und/oder zumindest einem Bewegungsparameter eine Regelgüte als Performanzwert bestimmt.

Eine Regelgüte ist die Größe, welche die Schnelligkeit der Regelung auf einen einzustellenden Bewegungsparameter angibt. Mit anderen Worten gibt die Regelgüte an, wie schnell der Antrieb von einem Ist-Bewegungsparameter zu einem abweichenden Soll-Bewegungsparameter gelangt.

Anhand der Anzeige der Regelgüte kann das Bedienpersonal erkennen, wie gut ein Regler eingestellt ist.

Bei einer weiteren vorteilhaften Ausgestaltung des Verfahrens ist zumindest einer der Performanzwerte
- eine Produktivität der Papiermaschine,
- eine Regelgüte,
- eine Funktionsstabilität,
- ein Fehlerdichte, oder
- eine Reglerfunktionalität.

Weiter können Performanzwerte die Qualität des Papiers, ein Energieverbrauch eines Teils wie einer Trockenpartie, eine Papierdicke, eine Faserausrichtung des Papiers oder eine Produktionsmenge pro Zeiteinheit sein. Kombinierte Größen wie die Energiemenge pro produzierte Einheit Papier können ebenfalls Performanzwerte sein und jeweils und in Kombination angezeigt werden.

Die Performanzwerte können je nach Ausgestaltung der Papiermaschine ausgewählt werden. Vorzugsweise werden einzelne oder mehrere Performanzwerte angezeigt, um den Betriebszustand der Papiermaschine auf einen Blick erkennbar zu gestalten.

Unter der Produktivität der Papiermaschine versteht man hierbei die Menge des produzierten Papiers pro Zeiteinheit. Unter der Funktionsstabilität kann beispielhaft ein Maß für die Schwankung der Produktivität oder die Qualität des produzierten Papiers verstanden werden. Unter dem Performanzwert "Fehlerdichte kann beispielhaft die Zahl der Bahnabrisse pro Zeiteinheit gemeint sein.

Unter dem Performanzwert der Reglerfunktionalität wird verstanden, wie stabil ein Antrieb seinen geregelten Bewegungsparameter einhält, oder ob ein Regler in kurzen Zeitabständen Abweichungen des jeweiligen Bewegungsparameters ausregeln muss.

Zusammenfassend geben die Performanzwerte Kennzahlen an, welche die Funktionsweise der Papiermaschine oder Teile der Papiermaschine zeigen. Bei einer geeigneten Normung können auch unterschiedliche Papiermaschinen in ihrer Funktion, Auslastung und Qualität der Einstellung verglichen werden.

Vorzugsweise erfolgen die Bestimmung und die Speicherung der Performanzwerte in einer nichtlokalen Recheneinheit oder einem zentralen Server. Eine nichtlokale Recheneinheit oder ein zentraler Server werden hier auch als Cloud bezeichnet. Die Berechnung der Performanzwerte aus den Bewegungsparametern und/oder den Reglerparametern erfolgt insbesondere aufgrund der mangelnden Kapazitäten der Bewegungssteuerung oder einer sonstigen lokalen Steuereinheit.

Zudem kann die nicht-lokale Recheneinheit mit einer Mehrzahl von Antriebssystemen, insbesondere von mehreren Papiermaschinen, verbunden sein. Als technische Datenverbindung eignet sich ein lokales Netzwerk (Intranet) oder auch das Internet. Zur Verbindung der Antriebssysteme dient vorzugsweise eine Ethernet-Verbindung oder eine WIFI-Verbindung (W-LAN).

Bei einer vorteilhaften Ausgestaltung des Antriebssystems ist ein Bus-System, insbesondere ein Feld-BUS, zur Bereitstellung der Bewegungsparameter für die jeweilige Bewegungssteuerung vorgesehen.

Das Bus-System kann als PROFI-BUS oder als Ethernet-Verbindung ausgestaltet sein. Das Bus-System dient zur Übertragung der durch Sensoren oder Geber und/oder im (Frequenz-) Umrichter ermittelten Bewegungsparameter an die jeweilige Bewegungssteuerung. Sensoren ermitteln beispielhaft die Temperatur des jeweiligen Antriebs, die Belastung eines Motors, die Frequenz der jeweiligen Versorgungsspannung des Motors. Die jeweilige Bewegungssteuerung leitet die Bewegungsparameter zu der nicht-lokalen Recheneinheit bzw. der Cloud weiter oder berechnet zumindest teilweise die zur Anzeige bestimmten Performanzwerte.

In einer weiteren vorteilhaften Ausgestaltung des Antriebssystems ist das Antriebssystem über eine technische Datenverbindung, insbesondere über eine nicht-lokale Recheneinheit bzw. einer Cloud, mit einem weiteren Antriebssystem verbunden.

Die Verbindung von Bewegungssteuerungen miteinander über die Cloud hat den Vorteil, dass Performanzwerte, Bewegungsparameter oder Reglerparameter von Bewegungssteuerungen miteinander ausgetauscht werden können.

Eine bevorzugte Anwendung der hier dargestellten Erfindung ist eine Papiermaschine. Die Papiermaschine weist vorzugsweise ein hier beschriebenes Antriebssystem auf.

Anstelle einer Papiermaschine kann ebenfalls eine andere Maschine zur Herstellung eines Grundstoffs wie eine Ölförderanlage, eine Erzaufbereitungsmaschine Einsatzgebiet der Erfindung sein.

Zusätzlich kann das Antriebssystem Teil einer Werkzeugmaschine, einer Produktionsmaschine oder einer anderen industriellen Anlage sein.

Mit anderen Worten betrifft die Erfindung ein Verfahren zum Betrieb einer Papiermaschine sowie ein Antriebssystem und eine Papiermaschine. Beim Betrieb des Antriebssystems oder beim Betrieb der Papiermaschine werden Bewegungsparameter wie eine Drehzahl eines Motors oder Reglerparameter ermittelt. Aus zumindest einem der Bewegungsparameter wird in einer Bewegungssteuerung und/oder einer nicht-lokalen Recheneinheit ein Performanzwert, auch als Key Performance Index bezeichnet, berechnet. Auf einer Anzeige wird dem Bedienpersonal der Papiermaschine der zumindest eine Performanzwert angezeigt. Durch den zumindest einen angezeigten Performanzwert kann das Bedienpersonal die Funktionsweise des jeweiligen Antriebssystems oder der Papiermaschine auf einen Blick erkennen und Fehler frühzeitig beheben.

Im Folgenden wird die Erfindung anhand von Figuren näher beschrieben und erläutert. Hierbei sind die gezeigten Ausführungsformen nicht als Einschränkung der Erfindung zu sehen. Einzelne Merkmale der gezeigten Ausführungen können zu neuen Ausführungsformen kombiniert werden. Es zeigen:
- FIG 1: eine Papiermaschine mit einem Antriebssystem,
- FIG 2: zwei Bewegungssteuerungen mit Antriebssystemen,
- FIG 3: zwei Bewegungssteuerungen sowie
- FIG 4: ein Verfahren zur Bereitstellung von Performanzwerten.

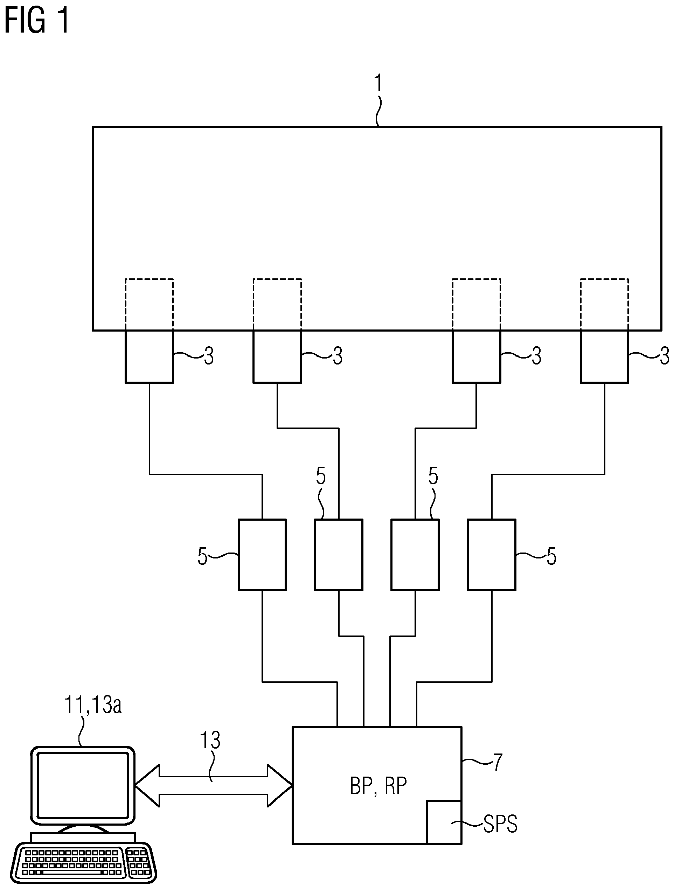

FIG 1 zeigt eine Papiermaschine 1 mit einem Antriebssystem. Das Antriebssystem umfasst eine Mehrzahl von Motoren 3. Die Motoren dienen beispielhaft zum Antrieb einer Warenbahn, insbesondere einer Papierbahn.

Der Motor 3 ist jeweils über einen Frequenzumrichter 5 mit einer Bewegungssteuerung 7 und/oder einer Speicherprogrammierbaren Steuerung (SPS) bzw. einer CPU, insbesondere einer SIMATIC Steuereinrichtung, optional mit entsprechendem Zusatzmodul, verbunden. Bevorzugt weist eine Bewegungssteuerung 7 eine Speicherprogrammierbare Steuerung SPS oder eine CPU auf. Die Bewegungssteuerung 7 erhält die Vorgaben bezüglich der Bewegungsparameter (Drehzahl, Drehmoment,...) beispielweise von einer übergeordneten Steuerung, hier durch eine Recheneinheit 11 dargestellt. Die Verbindung der übergeordneten Recheneinheit 11, die auch als zentraler Server oder als Cloud 13a ausgebildet sein kann, erfolgt über eine technische Datenverbindung 13.

Die Bewegungsparameter BP der einzelnen Motoren 3 sind meist gekoppelt. Die Kopplung der Bewegungsparameter BP erfolgt vorzugsweise in der Bewegungssteuerung 7 und/oder mit Hilfe der Frequenzumrichter 5.

Ein Bewegungsparameter BP kann ein Ort, eine Bahngeschwindigkeit, eine Drehgeschwindigkeit oder ein Drehmoment eines Antriebs sein. Ein Bewegungsparameter BP kann auch weitere Grö-ßen wie die Temperatur, eine Flussgeschwindigkeit eines Prozessmediums, eine Bahnspannung und/oder ein Belastungsparameter sein.

Ein Bewegungsparameter BP kann überdies auch eine Einstellung eines Regelkreises, beispielhaft ein Proportionalanteil eines PI- oder PID-Reglers sein.

Weiter weist die Bewegungssteuerung 7 zumindest einen Regler auf. Der Regler stellt Reglerparameter RP bereit. Der Regler dient zur Regelung des zumindest einen Bewegungsparameters BP.

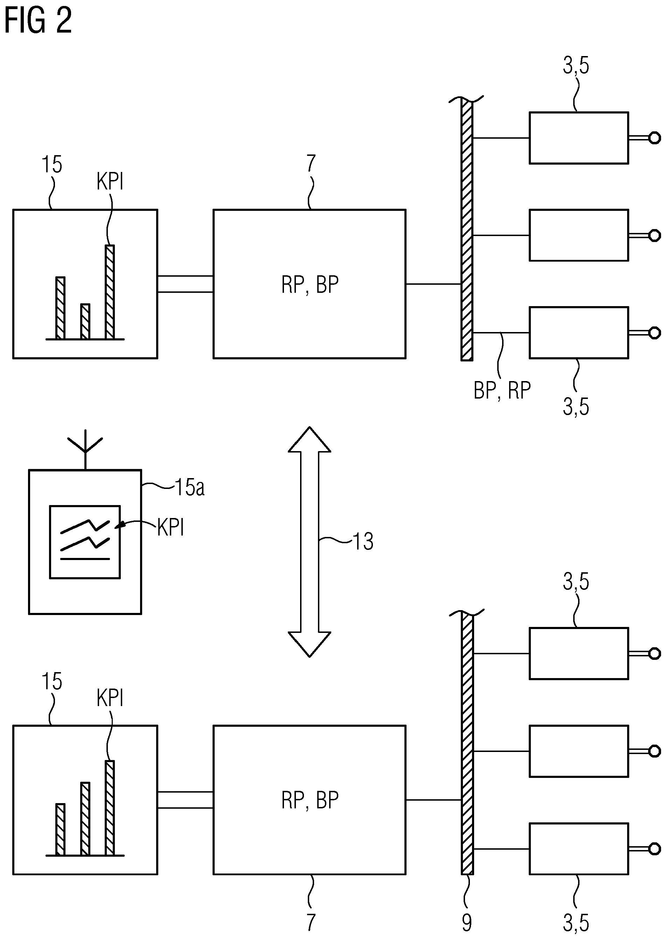

FIG 2 zeigt zwei Bewegungssteuerungen 7 mit Antrieben. Ein Antrieb umfasst jeweils einen Frequenzumrichter 5 und einen Motor 3. Die Antriebe sind jeweils über ein Bus-System 9 mit der Bewegungssteuerung 7 verbunden. Beispielhaft ist das Bus-System als eine Industrie-Netzwerk-Verbindung, z.B. PROFI-BUS, EtherCAT oder einer sonstigen Ethernet-Verbindung, ausgestaltet.

Die jeweilige Bewegungssteuerung ist durch eine technische Datenverbindung 13, beispielhaft durch ein übergeordnetes Netzwerk miteinander verbunden. Die technische Datenverbindung 13 kann auch über ein Intranet oder das Internet ausgeführt sein.

Die jeweilige Bewegungssteuerung 7 dient zur Aufnahme von Bewegungsparametern BP, durch die Antriebskomponenten bereitgestellt werden. Die jeweilige Bewegungssteuerung dient zur Berechnung von Performanzwerten KPI (als als Key Performance Indices bezeichnet).

Die Performanzwerte KPI können auf einer Anzeige 15 angezeigt werden. Der Bediener der Papiermaschine (nicht gezeigt) kann so anhand der Performanzwerte KPI auf den Betriebszustand des Antriebssystems oder der Papiermaschine schließen. Als Anzeige 15 ist auch ein mobiles Anzeigegerät 15a, wie ein Tabletcomputer oder ein Mobiltelefon (Smart-Phone), geeignet.

Als Performanzwerte KPI können Regler-Einstellungen, Abweichungen von (Dreh-)Geschwindigkeiten zu einer vorgegeben Drehgeschwindigkeit eine Temperatur, beispielhaft eines Bauteils, insbesondere des jeweiligen Motors 3, sein.

Das Anzeigen der Performanzwerte KPI dient zur schnellen Erkennung des Betriebszustandes der Antriebe und/oder der Papiermaschine.

Ein Austausch der Performanzwerte KPI dient insbesondere zum Vergleich von Betriebszuständen unterschiedlicher Bereiche einer Papiermaschine oder zum Vergleich von Papiermaschinen untereinander.

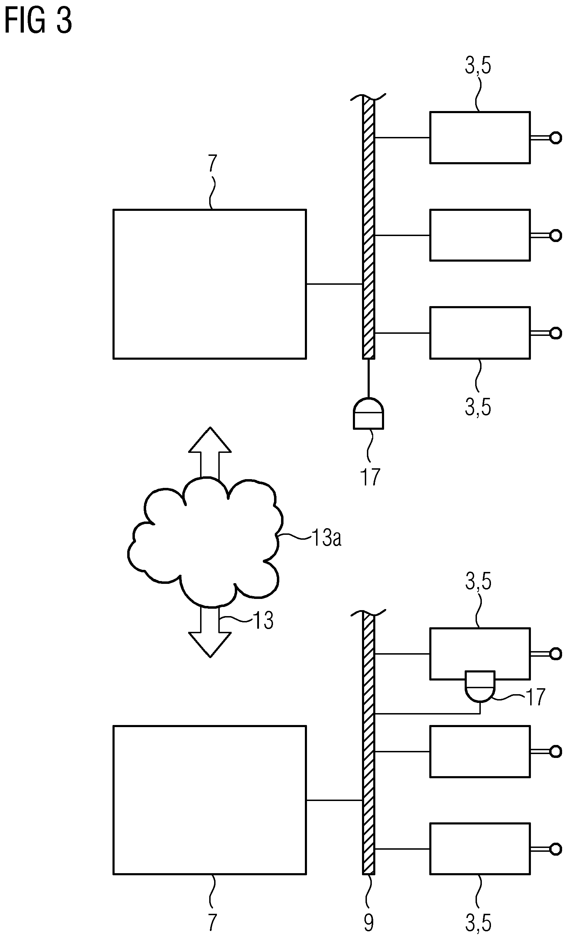

FIG 3 zeigt zwei Bewegungssteuerungen 7, die durch eine technische Datenverbindung 7 in Verbindung stehen, die als eine Cloud 13a ausgebildet ist. Die Cloud 13a ist als dezentrale Recheneinheit und als dezentraler Speicher für die Berechnung von Performanzwerten KPI und zur Speicherung von Bewegungsparametern BP ausgebildet.

Die Bewegungsparameter BP werden analog zur FIG 3 von einer Mehrzahl von Antrieben bereitgestellt. Die Antriebe weisen jeweils einen Frequenzumrichter 5 und jeweils einen Motor 3 auf. Zudem können mit Hilfe des Bus-Systems 9 weitere Detektoren 17 oder Sensoren Bewegungsparameter BP oder andere Parameter ermitteln und der jeweiligen Bewegungssteuerung 7 bereitstellen. Detektoren 17 können auch einem Umrichter 5 oder einem Motor 3 zugeordnet sein.

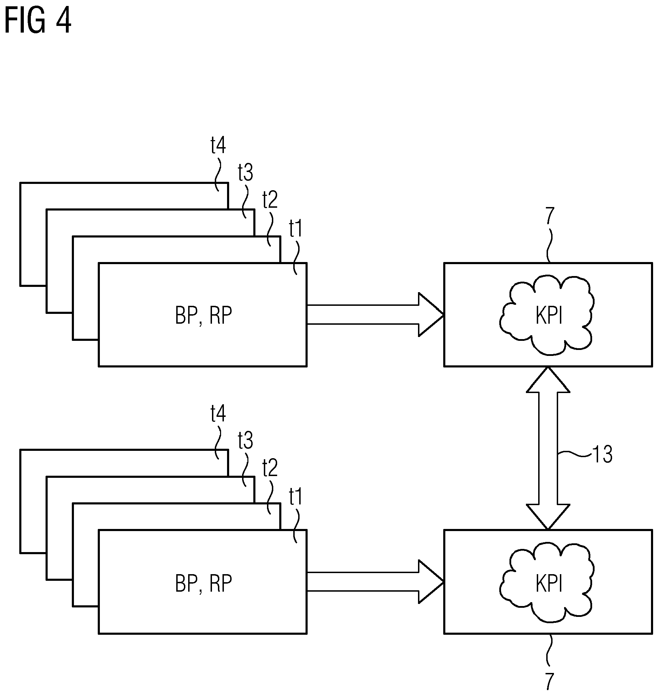

FIG 4 zeigt ein Verfahren zur Bereitstellung von Performanzwerten KPI. Die Berechnung der Performanzwerte KPI erfolgt mit Hilfe der durch die Antriebe und/oder durch Detektoren 17 bereitgestellte Bewegungsparameter BP.

Beispielhaft werden Bewegungsparameter BP und/oder Reglerparameter RP mit einem Zeitstempel t1,...,t4 versehen. Durch die Zeitstempel t1,...,t4 sind die Bewegungsparameter BP in einer Funktion von der Zeit darstellbar.

Durch die Bewegungsparameter BP und/oder die Reglerparameter RP sind auch die Performanzwerte KPI als Funktion der Zeit darstellbar. Durch eine Anzeige der Performanzwerte KPI als Funktion der Zeit können Veränderungen im Betriebsablauf der Maschine nachvollziehbar gestaltet werden.

Die technische Datenverbindung 13 zwischen den Bewegungssteuerungen 7 verdeutlicht, dass auch Performanzwerte unterschiedlicher Antriebe, insbesondere Antriebe unterschiedlicher Bereiche von Papiermaschinen sowie sogar unterschiedlicher Papiermaschinen miteinander verglichen werden können.

Zusammenfassend betrifft die Erfindung ein Verfahren und eine Vorrichtung zum Betrieb einer Papiermaschine 1 sowie eine Papiermaschine 1. Hierzu ist eine Mehrzahl von Motoren 3 mit einer Bewegungssteuerung 7 verbunden. Die Motoren 3, der (Frequenz-)Umrichter 5 und/oder Detektoren 17 stellen Bewegungsparameter BP für die Bewegungssteuerung 7 bereit. Aus den Bewegungsparametern BP werden Performanzwerte KPI berechnet, wobei die Performanzwerte den Betriebszustand der Papiermaschine 1 angeben. Durch die Anzeige der Performanzwerte KPI auf einer Anzeige 15, insbesondere auf einem Mobilgerät 15a mit einer Anzeige 15, kann ein Benutzer vorteilhaft den Betriebszustand der Papiermaschine erkennen. Weiter kann durch eine Verbindung von mehreren Bewegungssteuerungen 7 durch eine technische Datenverbindung 13 ein Vergleich von unterschiedlichen Bereichen von Papiermaschinen 1, insbesondere von mehreren Papiermaschinen, erfolgen. Durch die hier vorgestellte Erfindung kann auf negative Abweichungen im Betriebsablauf einer Papiermaschine 1 schnell reagiert werden.

## Patentansprüche

1. Verfahren zum Betrieb einer Papiermaschine, wobei die Papiermaschine eine Mehrzahl von Antrieben (3, 5) und eine Bewegungssteuerung (7) umfasst, wobei die Antriebe (3, 5) und optional Detektoren (17) Bewegungsparameter (BP) für die Bewegungssteuerung (7) bereitstellen, wobei mit Hilfe der Bewegungssteuerung (7) anhand der Bewegungsparameter (BP) und/ oder Reglerparameter (RP) zumindest ein Performanzwert (KPI) bestimmt wird, wobei die Bewegungssteuerung (7) zumindest einen Regler zur Regelung zumindest eines Bewegungsparameters (BP) aufweist, jeder Reglerparameter (RP) eine Stellgrö-ße eines Reglers der Bewegungssteuerung (7) ist und der zumindest eine Performanzwert (KPI) einen Betriebszustand der Papiermaschine (1) angibt, wobei der zumindest eine Performanzwert (KPI) auf einer Anzeige (15) angezeigt wird, wobei sich die Performanzwerte (KPI) aus den Bewegungsparametern (BP) und/ oder den Reglerparametern (RP), insbesondere aus deren jeweiligen zeitlichen Veränderungen, ergeben, und wobei aus zumindest einem Reglerparameter (RP) und/oder zumindest einem Bewegungsparameter (BP) eine Regelgüte als Performanzwert (KPI) bestimmt wird, wobei die Regelgüte eine Schnelligkeit der Regelung auf einen einzustellenden Bewegungsparameter (BP) angibt.

2. Verfahren nach Anspruch 1, wobei Bewegungsparameter (BP) von jeweils zwei Bewegungssteuerungen (7) zur Bestimmung des zumindest einen Performanzwertes (KPI) dienen, wobei die Bewegungssteuerungen (7) unterschiedlichen Einheiten der Papiermaschine (1) zugeordnet sind.

3. Verfahren nach Anspruch 2, wobei die Bewegungssteuerungen (7) unterschiedlichen Papiermaschinen zugeordnet sind und wobei, zwischen Bewegungssteuerungen (7) übertragene Daten mit Hilfe einer technischen Datenverbindung, insbesondere über eine Cloud, übertragen werden.

4. Verfahren nach einem der vorangehenden Ansprüche, wobei die Performanzwerte (KPI) unterschiedlichen Betriebszuständen der jeweiligen Papiermaschine (1) zugeordnet werden.

5. Verfahren nach einem der vorangehenden Ansprüche, wobei die Anzeige der Performanzwerte (KPI) in Form einer Spinnendarstellung, einer Ampeldarstellung oder einem Trend erfolgt.

6. Verfahren nach einem der vorangehenden Ansprüche, wobei ein Anzeigen einer zeitlichen Funktion der Performanzwerte (KPI) erfolgt.

7. Verfahren nach einem der vorangehenden Ansprüche, wobei zumindest einer der Performanzwerte (KPI)
- eine Produktivität der Papiermaschine,
- eine Funktionsstabilität,
- ein Fehlerauftreten, oder
- eine Reglerfunktionalität ist.

8. Verfahren nach einem der vorangehenden Ansprüche, wobei die Bestimmung des zumindest einen Performanzwertes (KPI) aus einer Mehrzahl von Bewegungsparametern (BP) und/oder Reglerparametern (RP) in einer nicht-lokalen Recheneinheit, insbesondere in einer Cloud, erfolgt.

9. Antriebssystem, insbesondere für eine Papiermaschine, aufweisend eine Mehrzahl von Antrieben und eine Bewegungssteuerung (7) sowie eine Anzeige (15), wobei die Antriebe und/oder Detektoren (17) zur Bereitstellung von Bewegungsparametern (BP) vorgesehen sind, wobei die Bewegungssteuerung (7) zur Bestimmung von Performanzwerten (KPI) aus den Bewegungsparametern (BP) vorgesehen ist und zumindest einen Regler zur Regelung zumindest eines Bewegungsparameters (BP) aufweist, wobei die Anzeige (15) zur Anzeige der Performanzwerte (KPI) vorgesehen ist, wobei sich die Performanzwerte (KPI) aus zeitlichen Veränderungen der Bewegungsparameter (BP) ergeben, **dadurch gekennzeichnet, dass** aus zumindest einem Bewegungsparameter (BP) eine Regelgüte als Performanzwert (KPI) bestimmt wird, wobei die Regelgüte eine Schnelligkeit der Regelung auf einen einzustellenden Bewegungsparameter (BP) angibt.

10. Antriebssystem nach Anspruch 9, wobei ein Bus-System (9), insbesondere ein Feld-BUS, zur Bereitstellung der Bewegungsparameter (BP) für die jeweilige Bewegungssteuerung (7) vorgesehen ist.

11. Antriebssystem nach Anspruch 9 oder 10, wobei das Antriebssystem über eine technische Datenverbindung (13), insbesondere über eine Cloud (13a), mit einem weiteren Antriebssystem verbunden ist.

12. Antriebssystem nach einem der Ansprüche 9 bis 11, wobei das Antriebssystem eine mobile Anzeige zur Anzeige zumindest eines Performanzwertes umfasst.

13. Papiermaschine, aufweisend ein Antriebssystem nach einem der Ansprüche 9 bis 12.

## Claims

1. Method for operating a paper machine, wherein the paper machine comprises a plurality of drives (3, 5) and a motion controller (7), wherein the drives (3, 5) and optional detectors (17) provide motion parameters (BP) for the motion controller (7), wherein at least one performance value (KPI) is determined with the aid of the motion controller (7) by using the motion parameters (BP) and/or controller parameters (RP), wherein the motion controller (7) has at least one closed-loop controller for controlling at least one motion parameter (BP), each controller parameter (RP) is a manipulated variable of a closed-loop controller of the motion controller (7) and the at least one performance value (KPI) indicates an operating state of the paper machine (1), wherein the at least one performance value (KPI) is displayed on a display (15), wherein the performance values (KPI) are derived from the motion parameters (BP) and/or the controller parameters (RP), in particular from their respective changes over time, and wherein a control quality is determined as a performance value (KPI) from at least one controller parameter (RP) and/or at least one motion parameter (BP), wherein the control quality indicates a speed of the closed-loop control response to a motion parameter (BP) to be set.

2. Method according to Claim 1, wherein motion parameters (BP) from two respective motion controllers (7) are used to determine the at least one performance value (KPI), wherein the motion controllers (7) are assigned to different units of the paper machine (1).

3. Method according to Claim 2, wherein the motion controllers (7) are assigned to different paper machines and wherein data transmitted between motion controllers (7) is transmitted with the aid of a technical data link, in particular via a cloud.

4. Method according to one of the preceding claims, wherein the performance values (KPI) are associated with different operating states of the respective paper machine (1).

5. Method according to one of the preceding claims, wherein the performance values (KPI) are displayed in the form of a spider diagram, a traffic light display or a trend.

6. Method according to one of the preceding claims, wherein a time function of the performance values (KPI) is displayed.

7. Method according to one of the preceding claims, wherein at least one of the performance values (KPI) is
- a productivity of the paper machine,
- a functional stability,
- a fault occurrence, or
- a controller functionality.

8. Method according to one of the preceding claims, wherein the determination of the at least one performance value (KPI) from a plurality of motion parameters (BP) and/or controller parameters (RP) is carried out in a non-local computing unit, in particular in a cloud.

9. Drive system, in particular for a paper machine, having a plurality of drives and a motion controller (7) and a display (15), wherein the drives and/or detectors (17) are provided to provide motion parameters (BP), wherein the motion controller (7) is provided to determine performance values (KPI) from the motion parameters (BP) and has at least one closed-loop controller for controlling at least one motion parameter (BP), wherein the display (15) is provided to display the performance values (KPI), wherein the performance values (KPI) are derived from changes in the motion parameters (BP) over time, **characterized in that** a control quality is determined as a performance value (KPI) from at least one motion parameter (BP), wherein the control quality indicates a speed of the closed-loop control response to a motion parameter (BP) to be set.

10. Drive system according to Claim 9, wherein a bus system (9), in particular a fieldbus, is provided to provide the motion parameters (BP) for the respective motion controller (7).

11. Drive system according to Claim 9 or 10, wherein the drive system is connected to a further drive system via a technical data link (13), in particular via a cloud (13a).

12. Drive system according to one of Claims 9 to 11, wherein the drive system comprises a mobile display for displaying at least one performance value.

13. Paper machine having a drive system according to one of Claims 9 to 12.

## Revendications

1. Procédé pour faire fonctionner une machine à papier, dans lequel la machine à papier comprend une pluralité d'entraînements (3, 5) et une commande (7) de mouvement, dans lequel les entraînements (3,5) et éventuellement des détecteurs (17) mettent des paramètres (BP) de mouvement à disposition de la commande (7) de mouvement, dans lequel, à l'aide de la commande (7) de mouvement, on détermine, au moyen des paramètres (BP) de mouvement et/ou de paramètres (RP) de régleur, au moins une valeur (KPI) de performance, dans lequel la commande (7) de mouvement a au moins un régleur pour le réglage d'au moins un paramètre (BP) de mouvement, chaque paramètre (RP) de régleur est une grandeur réglante d'un régleur de la commande (7) de mouvement, et la au moins une valeur (KPI) de performance indique un état de fonctionnement de la machine (1) à papier, dans lequel on affiche la au moins une valeur (KPI) de performance sur un affichage (15), dans lequel les valeurs (KPI) de performance proviennent des paramètres (BP) de mouvement et/ou des paramètres (RP) de régleur, en particulier de leurs variations respectives en fonction du temps, et dans lequel on détermine comme valeur (KPI) de performance une qualité de réglage à partir d'au moins un paramètre (RP) de régleur et/ou d'au moins un paramètre (BP) de mouvement, dans lequel la qualité de réglage indique une rapidité du réglage à un paramètre (BP) de mouvement à régler.

2. Procédé suivant la revendication 1, dans lequel des paramètres (BP) de mouvement, de respectivement deux commandes (7) de mouvement, servent à la détermination de la au moins une valeur (KPI) de performance, dans lequel les commandes (7) de mouvement sont affectées à des unités différentes de la machine (1) à papier.

3. Procédé suivant la revendication 2, dans lequel les commandes (7) de mouvement sont affectées à des machines à papier différentes, et dans lequel on transmet des données, transmises entre des commandes (7) de mouvement, à l'aide d'une liaison de données technique, en particulier par un nuage.

4. Procédé suivant l'une des revendications précédentes, dans lequel on affecte les valeurs (KPI) de performance à des états de fonctionnement différents de la machine (1) à papier respective.

5. Procédé suivant l'une des revendications précédentes, dans lequel on effectue l'affichage des valeurs (KPI) de performance sous la forme d'une représentation en toile d'araignée, d'une représentation en feux tricolores ou d'une tendance.

6. Procédé suivant l'une des revendications précédentes, dans lequel on effectue un affichage d'une fonction temporelle des valeurs (KPI) de performance.

7. Procédé suivant l'une des revendications précédentes, dans lequel au moins l'une des valeurs (KPI) de performance est
- une productivité de la machine à papier,
- une stabilité de fonctionnement,
- une apparition de défauts ou
- une fonctionnalité de régleur.

8. Procédé suivant l'une des revendications précédentes, dans lequel la détermination de la au moins une valeur (KPI) de performance s'effectue à partir d'une pluralité de paramètres (BP) de mouvement et/ou de paramètres (RP) de régleur, dans une unité informatique non locale, en particulier dans un nuage.

9. Système d'entraînement, en particulier d'une machine à papier, comportant une pluralité d'entraînements et une commande (7) de mouvement, ainsi qu'un affichage (15), dans lequel il est prévu les entraînements et/ou des détecteurs (17) de mise à disposition de paramètres (BP) de mouvement, dans lequel la commande (7) de mouvement est prévue pour la détermination de valeurs (KPI) de performance à partir des paramètres (BP) de mouvement et a au moins un régleur de réglage d'au moins un paramètre (BP) de mouvement, dans lequel l'affichage (15) est prévu pour l'affichage des valeurs (KPI) de performance, dans lequel les valeurs (KPI) de performance proviennent de variations en fonction du temps des paramètres (BP) de mouvement, **caractérisé**
**en ce que** l'on détermine à partir d'au moins un paramètre (BP) de mouvement, une qualité de réglage comme valeur (KPI) de performance, dans lequel la qualité de réglage indique une rapidité du réglage à un paramètre (BP) de mouvement à régler.

10. Système d'entraînement suivant la revendication 9, dans lequel un système (9) de bus, en particulier un bus sur site, est prévu pour la mise des paramètres (BP) de mouvement à disposition de la commande (7) respective de mouvement.

11. Système d'entraînement suivant la revendication 9 ou 10, dans lequel le système d'entraînement est relié à un autre système d'entraînement par une liaison (13) de données technique, en particulier par un nuage (13a).

12. Système d'entraînement suivant l'une des revendications 9 à 11, dans lequel le système d'entraînement comprend un affichage mobile pour l'affichage d'au moins une valeur de performance.

13. Machine à papier comportant un système d'entraînement suivant l'une des revendications 9 à 12.
